# FASCICULE DE BREVET EUROPEEN

(11) **EP 2 758 174 B1**
(45) Date de publication et mention de la délivrance du brevet: **16.03.2016**
(21) Numéro de dépôt: 12761970.8
(22) Date de dépôt: 18.09.2012
(51) Int. Cl.: G01N 1/14, B01L 3/02

(54) **PIPETTE À DÉPLACEMENT POSITIF PRÉSENTANT UNE FONCTION D'ÉJECTION AMÉLIORÉE**
PIPETTE MIT SPITZENABWURFMECHANISMUS
PIPETTE WITH TIP EJECTION MEANS

(30) Priorité: 19.09.2011 FR 1158309
(43) Date de publication de la demande: 30.07.2014
(73) Titulaire: GILSON SAS, 95400 Villiers-le-Bel (FR)
(72) Inventeur: VOYEUX, Claude, F-95190 Goussainville (FR); THEBAUD, Thierry, F-60300 Senlis (FR)
(74) Mandataire: Ahner, Philippe
(86) Numéro de dépôt international: PCT/EP2012/068294
(87) Numéro de publication internationale: WO 2013/041505

(56) Documents cités:
- EP-A1- 0 032 469
- DE-A1- 2 647 883
- JP-A- 4 225 845
- US-A- 3 525 264

## Description

### DOMAINE TECHNIQUE

La présente invention se rapporte au domaine des pipettes de prélèvement à déplacement positif.

De telles pipettes sont destinées à coopérer avec des consommables du type capillaire-piston, dont le piston est prévu pour être directement en contact avec l'échantillon à prélever, avant d'être éjecté ou réutilisé. Les pipettes à déplacement positif présentent donc une conception différente de celle des pipettes plus classiques à déplacement d'air, dans lesquelles le piston fait partie intégrante de la pipette.

L'invention concerne plus spécifiquement la fonction d'éjection de l'ensemble capillaire-piston.

### ETAT DE LA TECHNIQUE ANTERIEURE

Les pipettes à déplacement positif sont habituellement employées pour le prélèvement de liquides visqueux, volatils et/ou contaminants. Leur association avec des consommables du type « capillaire-piston » permet d'éviter la contamination de la pipette.

Une telle pipette est par exemple connue du document FR 2 446 672.

Sur les pipettes à déplacement positif connues de l'art antérieur, il est prévu une tige de commande dont l'extrémité basse commande le déplacement d'un dispositif de préhension de l'extrémité haute d'un piston, appartement à un ensemble capillaire-piston destiné à coopérer avec la pipette. Ce dispositif de préhension est également dénommé « pince ».

La pipette est conçue de manière à pouvoir exercer deux courses successives vers le bas avec la tige de commande, via un bouton de commande agencé à son extrémité haute. La première course de la tige de commande correspond à la course de dispense de l'échantillon prélevé. Elle s'effectue en s'opposant à la force de rappel d'un premier ressort, de préférence de compression. La deuxième course de la tige de commande correspond à la présentation et à l'ouverture de la pince de préhension du piston. Elle s'effectue en s'opposant à la force de rappel d'un second ressort, de préférence de compression, agencé selon la même direction que le premier ressort et présentant une raideur nettement plus élevée.

Plus précisément, cette seconde course a pour conséquence d'extraire les mâchoires de la pince d'un fourreau qui les enserre. Une fois les mâchoires libérées de leur fourreau, elles peuvent facilement laisser pénétrer l'extrémité haute du piston lors de l'installation du consommable sur la pipette, qui voit par ailleurs simultanément l'emmanchement du capillaire sur l'embout de la pipette.

La première phase de remontée de la tige de commande, sous l'effet de la force de rappel du second ressort, a pour conséquence de rétracter les mâchoires dans le fourreau de la pince, avec l'extrémité haute du piston maintenue par les mâchoires en position serrée. La seconde phase de remontée de la tige de commande, sous l'effet de la force de rappel du premier ressort de raideur plus faible, conduit au déplacement de cette tige ainsi que de la pince enserrant le piston jusque dans une position haute, par rapport au corps de pipette.

Pour effectuer un prélèvement d'échantillon, l'opérateur doit à nouveau effectuer la première course de la tige de commande avec le piston embarqué, jusqu'à la compression totale du premier ressort amenant le piston à son point bas de prélèvement. Une poursuite de la course à ce stade, c'est-à-dire une amorce accidentelle de la seconde course à l'encontre du second ressort, aurait pour conséquence un déplacement excessif du piston vers le bas, et conduirait à une erreur dans la quantité d'échantillon prélevé. Une sur-course excessive du piston pourrait même conduire à l'éjection accidentelle du piston et du capillaire, en raison de la libération des mâchoires de la pince par le fourreau qui les entoure, et de l'appui de ces mâchoires sur le capillaire. Une telle éjection est non seulement problématique en termes de productivité, mais génère par ailleurs des risques non-négligeables de projection de liquide lorsque l'ensemble capillaire-piston tombe dans un récipient de liquide.

Lorsque le piston a atteint son point bas à la fin de la première course, le consommable est plongé dans le liquide à prélever. Pour assurer le prélèvement, l'opérateur relâche alors progressivement la pression exercée par son pouce sur le bouton de commande, ce qui permet à la tige de commande et au piston de remonter sous l'effet de la force de rappel du premier ressort. Durant cette remontée, le liquide au contact de l'extrémité basse du piston s'introduit dans le capillaire.

Pour la dispense, l'opérateur effectue à nouveau la première course de la tige de commande par pression de son pouce sur le bouton de commande, en plaçant le capillaire dans le récipient destiné à recevoir le liquide. Ici encore, en cas de sur-course du piston, celui-ci risque d'être accidentellement éjecté avec le capillaire, générant ainsi à nouveau un risque de projection accidentelle de liquide.

Enfin, une fois que l'opération de dispense du liquide est achevée, l'opérateur peut effectuer la seconde course de la tige de commande afin de provoquer l'éjection désirée du consommable capillaire-piston. Néanmoins, cette opération d'éjection s'effectue à l'aide du seul pouce de l'opérateur en contrant la force de rappel du second ressort, qui est nécessairement substantielle afin de contraster avec la force de rappel du premier ressort, et pouvoir ainsi assurer sa fonction de délivrance d'un signal sensitif à l'opérateur en fin de première course. La forte raideur du second ressort rend ainsi la pipette perfectible d'un point de vue ergonomique, surtout que cet inconvénient se produit également lors de l'opération décrite ci-dessus d'ouverture de la pince, avant l'introduction du piston.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet une pipette de prélèvement à déplacement positif, comprenant une tige de commande dont l'extrémité basse commande le déplacement d'un dispositif de préhension de l'extrémité haute d'un piston appartement à un ensemble capillaire-piston destiné à coopérer avec ladite pipette, cette dernière comprenant également une tige d'éjection dudit ensemble capillaire-piston, montée mobile par rapport à ladite tige de commande de manière à ce que son extrémité basse puisse exercer un effort d'éjection sur l'extrémité haute dudit piston logée dans ledit dispositif de préhension, lors d'un déplacement relatif entre la tige d'éjection et la tige de commande.

L'invention est remarquable en ce qu'elle est basée sur une conception dissociant les éléments permettant d'assurer la fonction de commande de la pipette et la fonction d'éjection du consommable capillaire-piston.

Plus précisément, l'invention prévoit que l'éjection du consommable s'effectue par une tige dédiée, distincte de la tige de commande. Par conséquent, contrairement aux réalisations de l'art antérieur, les risques d'éjection accidentelle du avantageusement réduits à néant. Ainsi, durant la manipulation de la pipette selon l'invention, l'opérateur peut actionner la tige de commande sans se soucier des risques d'une telle perte, ce qui permet globalement d'améliorer l'ergonomie, la reproductibilité des prélèvements, et la productivité.

Ces améliorations sont encore davantage renforcées par la technologie d'éjection employée, qui repose sur la poussée du piston à l'aide de l'extrémité basse de la tige d'éjection, lui-même entraînant dans sa course le capillaire, par butée. La force à délivrer pour assurer l'éjection du consommable peut ainsi être beaucoup plus faible que celle requise antérieurement pour contrer la force de rappel du ressort à raideur élevée, puisqu'il n'est plus nécessaire de prévoir un différentiel élevé de raideurs de ressorts aux fins de production d'un signal sensoriel pour l'opérateur. De plus, la faible force d'appui requise pour désengager le piston du dispositif de préhension et pour désemmancher le capillaire de l'embout de pipette n'a aucune incidence sur les risques de pertes accidentelles du consommable capillaire-piston, comme cela a été expliqué ci-dessus.

De préférence, ledit dispositif de préhension prend la forme d'une pince à au moins deux mâchoires rappelées en position serrée par des moyens élastiques de rappel, de préférence entourant ces mêmes mâchoires. Cela permet de simplifier le processus de manipulation de la pipette, notamment pour ce qui concerne l'installation du consommable sur celle-ci.

A cet égard, l'invention a également pour objet un procédé de pipetage à l'aide d'une telle pipette de prélèvement à déplacement positif, comprenant les étapes successives suivantes :
(a) emmanchement du capillaire de l'ensemble capillaire-piston sur un embout de la pipette, et introduction de l'extrémité haute du piston de l'ensemble dans la pince lors du déplacement de ladite tige de commande jusqu'à une position basse, ladite introduction étant réalisée par écartement des mâchoires sollicitées radialement vers l'extérieur par l'appui de l'extrémité haute du piston, ledit écartement étant autorisé par déformation desdits moyens élastiques de rappel associés auxdites mâchoires ;
(b) prélèvement et dispense d'un échantillon par actionnement de ladite tige de commande ;
(c) éjection de l'ensemble capillaire-piston par actionnement de ladite tige d'éjection.

Lors de l'étape (a), l'emmanchement du capillaire et l'introduction du piston s'effectue préférentiellement successivement. Ainsi, l'opération d'emmanchement s'opère d'une manière analogue à celle effectuée avec les pipettes classiques à déplacement d'air, sans actionner la tige de commande. Lorsque l'emmanchement du capillaire est achevé, l'introduction du piston dans la pince est alors initiée et réalisée par simple déplacement de la tige de commande, grâce à une action ne nécessitant qu'un faible effort de la part de l'opérateur, essentiellement conditionné par la raideur des moyens élastiques de rappel entourant les mâchoires. Les opérations ci-dessus sont donc familières pour les opérateurs, ce qui renforce l'ergonomie de la pipette et procure des gains en termes de productivité.

Il est noté que selon une alternative, lors de l'étape (a), l'emmanchement du capillaire et l'introduction du piston peuvent s'effectuer simultanément, sans sortir du cadre de l'invention.

A la fin de l'étape (a), le piston se situe en position basse de butée dans le capillaire. Ainsi, pour simplifier le processus de prélèvement, ladite tige de commande est maintenue en position basse à la fin de l'étape (a) jusqu'au prélèvement de l'échantillon, durant lequel la tige de commande remonte avec le piston pour créer l'aspiration du liquide.

De préférence, ladite tige d'éjection est logée à l'intérieur de la tige de commande creuse, même s'il pourrait en être autrement, sans sortir du cadre de l'invention. A titre d'exemple indicatif, la tige d'éjection pourrait être logée au sein du corps extérieur de pipette, autour de la tige de commande, et disposer d'une extrémité basse pénétrant à l'intérieur du dispositif de préhension pour pouvoir appliquer l'effort d'éjection spécifique à la présente invention, sur l'extrémité haute du piston.

De préférence, la pipette comporte un bouton de commande agencé à l'extrémité haute de la tige de commande, ainsi qu'un bouton d'éjection agencé à l'extrémité haute de la tige d'éjection. Ledit bouton d'éjection est alors préférentiellement agencé entre le bouton de commande et un corps de pipette formant poignée.

De préférence, ledit bouton d'éjection est porté par un organe de support monté sur la tige d'éjection et traversant un passage oblong pratiqué dans la tige de commande, ledit organe de support étant apte à coulisser dans ledit passage oblong.

De préférence, ladite pipette est équipée de moyens élastiques de rappel rappelant ladite tige d'éjection dans une position haute relativement à ladite tige de commande. Il s'agit préférentiellement d'un ressort de compression.

De préférence, lesdits moyens élastiques de rappel rappelant ladite tige d'éjection dans une position haute relativement à ladite tige de commande sont conçus de telle sorte que lors d'un actionnement dudit bouton d'éjection, une première course a pour effet d'entraîner ladite tige de commande avec ladite tige d'éjection, via lesdits moyens élastiques de rappel, et une seconde course est amorcée lorsque le déplacement de la tige de commande est stoppé en translation par butée en fin de ladite première course, ladite seconde course produisant ledit déplacement relatif entre la tige d'éjection et la tige de commande, provoquant ledit effort d'éjection sur l'extrémité haute dudit piston.

De préférence, la pipette est conçue de sorte qu'à la fin de ladite première course, ladite tige de commande en butée place ledit dispositif de préhension au moins partiellement en saillie vers le bas à partir d'un embout de pipette sur lequel le capillaire dudit ensemble capillaire-piston est destiné à être emmanché. Cela permet en particulier de faciliter l'écartement des mâchoires de la pince, lors de l'introduction de l'extrémité haute du piston.

De préférence, la butée basse pour ladite tige de commande est agencée sur une partie basse de la pipette intégrant l'embout, et de préférence conçue pour coopérer avec une butée prévue sur ledit dispositif de préhension interposé entre ladite tige de commande et la butée basse. Alternativement, la tige de commande pourrait être équipée d'une butée lui permettant de venir directement en appui sur la butée de la partie basse de la pipette, sans sortir du cadre de l'invention.

Enfin, il est noté que la pipette peut être à prélèvement de volume unique, ou bien comporter un dispositif de réglage du volume d'échantillon à prélever.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'une pipette de prélèvement à déplacement positif, selon un mode de réalisation préféré de la présente invention ;
- la figure 2 représente une vue de face de la tige de commande équipant la pipette montrée sur la figure précédente ;
- la figure 3 représente une vue en perspective de la pince de piston équipant la pipette montrée sur la figure 1 ;
- la figure 4 représente une vue partielle en coupe longitudinale de la pince montrée sur la figure précédente ; et
- les figures 5 à 8 représentent différentes vues schématisant le fonctionnement de la pipette montrée sur les figures précédentes.

### EXPOSÉ DÉTAILLÉ DE MODES DE RÉALISATION PRÉFÉRÉS

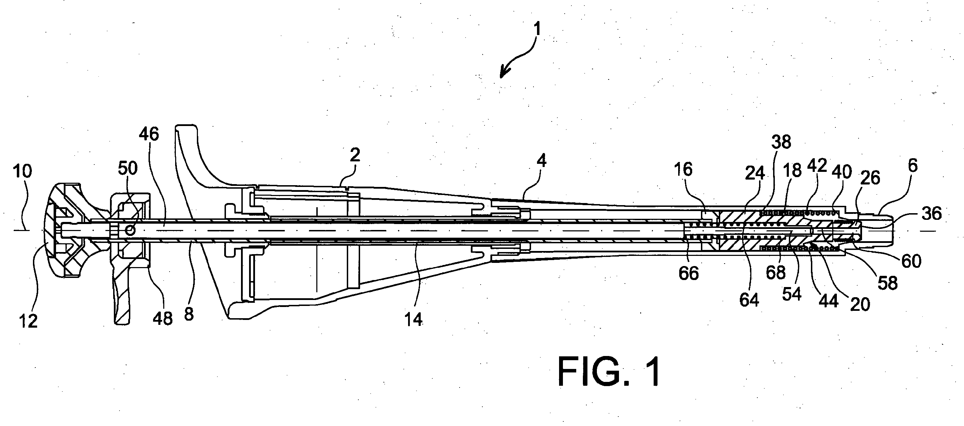

En référence tout d'abord à la figure 1, il est représenté une pipette de prélèvement 1 à déplacement positif, selon un mode de réalisation préféré de la présente invention.

Dans toute la description qui va suivre, les termes « haut » et « bas » sont à considérer avec la pipette maintenue à la verticale, en position de pipetage ou proche de cette même position.

La pipette 1 présente un corps extérieur dont la partie haute forme une poignée 2 pour l'opérateur, et dont la partie basse 4 est plus effilée, se terminant vers le bas par un embout 6 sur lequel un capillaire est destiné à être emmanché. La partie basse 4 est montée préférentiellement vissée sur le corps formant poignée 2, de manière à faciliter le montage/démontage.

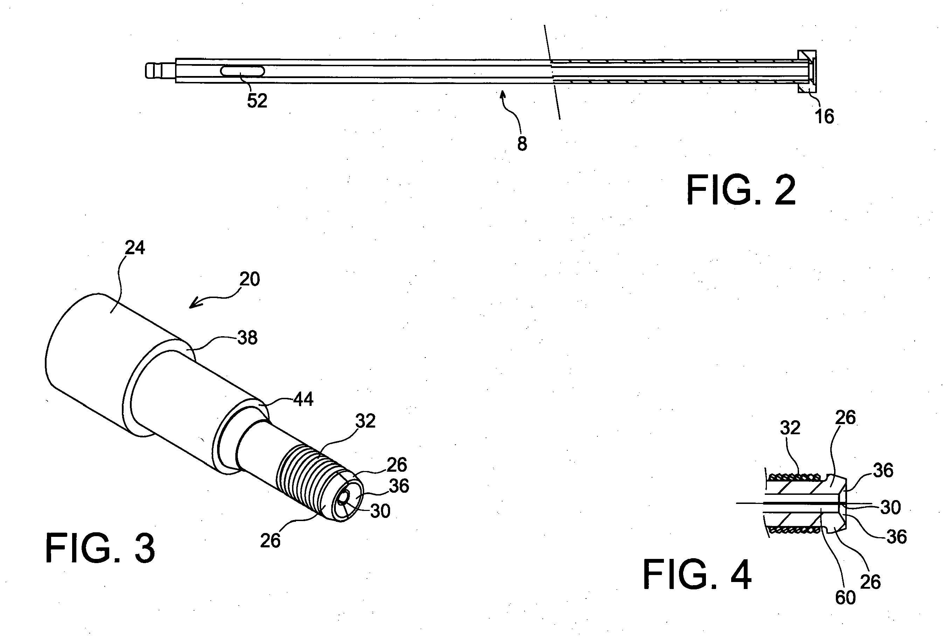

La pipette intègre une tige de commande 8, logée à coulissement à l'intérieur du corps extérieur de pipette. La tige 8 est creuse, et agencée selon l'axe longitudinal 10 de la pipette. Son extrémité haute fait saillie vers le haut à partir du corps formant poignée 2, et porte un bouton de commande 12 destiné à être actionné par le pouce d'un opérateur tenant le corps 2 avec l'une de ses mains. Comme cela est montré sur la figure 2, la tige présente une section transversale de forme non circulaire, ici de forme hexagonale ou octogonale. Elle est logée coulissante à travers une vis de réglage 14 de volume à prélever, dont la partie creuse intérieure est de forme complémentaire de la surface extérieure de la tige 8, et dont la surface extérieure est filetée, montée vissée sur l'extrémité inférieure du corps formant poignée 2.

D'une manière connue, la rotation de la tige de commande 8 par son bouton 12 permet de déplacer la vis de réglage relativement au corps extérieur de pipette selon la direction de l'axe 10, et entraîne donc une modification du volume de l'échantillon destiné à être prélevé.

L'extrémité basse de la tige de commande 8, formant guidage dans l'alésage 18 pratiqué au sein de la partie basse 4, est en appui axial contre une pince 20 également montée coulissante dans l'alésage 18.

Comme cela est visible sur les figures 1, 2 et 4, la pince 20 comporte un corps 24 de contact avec l'extrémité basse 16 de la tige de commande, prolongé vers le bas par deux mâchoires ou plus. A titre d'exemple indicatif, il est prévu deux mâchoires 26, l'une réalisée d'un seul tenant avec le corps de pince 24, et l'autre montée sur ce même corps de pince. Des moyens élastiques de rappel permettent de rappeler les deux mâchoires en position serrée, dans laquelle elles sont rétractées radialement vers l'intérieur. La fente 30 les séparant présente alors une faible dimension.

Pour ce faire, les moyens élastiques de rappel sollicitent les mâchoires 26 radialement vers l'intérieur, de préférence en entourant ces mêmes mâchoires. Il peut alors s'agir d'un ressort 32 de forme globale annulaire, dont le diamètre peut être augmenté lorsqu'il est mis en contrainte radialement vers l'extérieur. Dans l'exemple montré sur les figures, le ressort 32 prend la forme d'un ressort à spirales enserrant la surface extérieure des mâchoires 26.

Comme cela est le mieux visible sur la figure 4, chaque mâchoire 26 présente une extrémité 36 chanfreinée de manière à faciliter l'insertion du piston, comme cela sera explicité ci-après.

De plus, le corps de pince 24 présente un premier épaulement 38 orienté vers le bas, en regard et à distance d'un épaulement 40 pratiqué sur la partie basse 4, à proximité de l'embout 6. Un ressort de rappel 42 est logé en appui entre ces deux épaulements 38, 40, afin de constituer un ressort de rappel en position haute de cette pince 20 et de la tige de commande située en appui, dans son prolongement. La force de rappel développée par ce ressort de compression 42 conduit effectivement la tige de commande 8 à adopter sa position haute par rapport au corps extérieur, une butée haute conventionnelle (non représentée) étant prévue à cet effet sur ce même corps extérieur.

La pince 20 comporte un second épaulement 44, également orienté vers le bas en regard et à distance de l'épaulement 40. Le second épaulement 44 se situe plus vers bas et radialement vers l'intérieur par rapport au premier épaulement 38. Il est ainsi entouré par le ressort 42. Comme cela sera décrit ci-après, il est prévu pour constituer une butée basse pour la pince 20 et la tige de commande 8 en appui sur cette même pince. Dans la position haute montrée sur la figure 1, les extrémités 36 des mâchoires de pince se situent dans l'embout 6, dans une position rétractée à l'intérieur de ce dernier. Le diamètre intérieur de l'embout présente d'ailleurs une valeur proche du diamètre moyen de la pince 20 avec ses mâchoires 26 en position serrée.

L'une des particularités de la présente invention réside dans la présence d'une tige d'éjection 46 montée coulissante à l'intérieur de la tige creuse de commande 8. Cette tige d'éjection 46 présente une surface extérieure complémentaire de la surface intérieure de la tige de commande 8. Son extrémité haute se trouve agencée entre le bouton de commande 12 et le corps formant poignée 2, et porte un bouton d'éjection 48. Pour ce faire, le bouton 48 est porté par un organe de support 50 en forme de goupille, qui est monté sur la tige d'éjection 8 et qui traverse un passage oblong 52 pratiqué dans la tige de commande, montré sur la figure 2. La goupille 50 est alors apte à coulisser dans le passage oblong 52 durant le déplacement relatif entre les deux tiges 8, 46, correspondant à un coulissement selon la direction de l'axe 10.

L'extrémité basse 54 de la tige d'éjection 46 est plus effilée, de forme cylindrique et de section circulaire. Elle pénètre au sein d'un alésage 58 pratiqué au sein du corps creux, de manière traversante jusqu'à l'espace 60 défini entre les pinces.

Au niveau de la rupture de forme entre l'extrémité basse 54 et la partie haute de la tige 46, celle-ci définit un épaulement 66 orientée vers le bas, en regard et à distance d'un épaulement 68 pratiqué sur la pince 20, dans l'alésage 58. Un ressort de rappel 64 est logé en appui entre ces deux épaulements 66, 68, afin de constituer un ressort de rappel en position haute pour la tige d'éjection 46 par rapport à la tige de commande 8 située extérieurement. La force de rappel développée par ce ressort de compression 64 conduit effectivement la tige d'éjection 46 à adopter sa position haute par rapport à la tige de commande 8, une butée haute étant réalisée par l'appui du bouton d'éjection entourant la tige 8, sur l'extrémité basse du bouton de commande 12, comme cela est visible sur la figure 1. Une telle butée pourrait alternativement être constituée par l'appui de la goupille 50 sur l'extrémité haute du passage oblong 52 pratiqué transversalement sur la tige de commande.

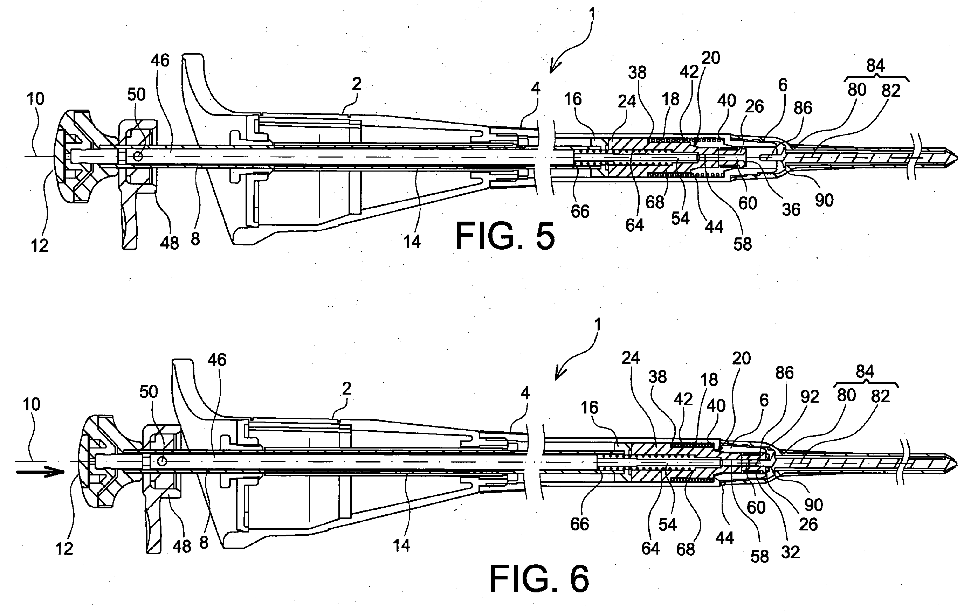

En référence à présent aux figures 5 à 8, il va être décrit le fonctionnement de la pipette 1.

Tout d'abord, l'opérateur agrippant la pipette par la poignée 2 engage l'embout 6 dans un capillaire 80 d'un ensemble capillaire-piston consommable 84, de préférence agencé dans un boîtier, également appelé « rack ». En exerçant une pression verticale vers le bas sur la pipette, il obtient l'emmanchement du capillaire 80 sur l'embout 6, à la manière de l'emmanchement d'un capillaire ou d'un cône conventionnel sur l'embout d'une pipette classique à déplacement d'air. Cet emmanchement a été schématisé sur la figure 5.

Ensuite, comme cela est visible sur la figure 6, l'opérateur appuie sur le bouton de commande 12 afin d'amener la tige de commande et la pince en position basse. Ce déplacement a pour but de conduire à l'introduction de l'extrémité haute 86 du piston 82 de l'ensemble 84 dans la pince 24. Cette introduction du piston va être détaillée ci-dessous.

Durant la descente de la tige 8 contrant la force de rappel du ressort 42, les extrémités chanfreinées 36 des mâchoires de pinces commencent par venir au contact de l'extrémité 86 du piston 82, qu'elles poussent alors en position basse dans le capillaire 80 si cela n'est pas déjà le cas. Cette position basse est atteinte lorsque la collerette 90 située sous l'extrémité haute 86 du piston 82 arrive en butée contre un épaulement correspondant 92 à l'intérieur du capillaire 80.

Ensuite, au fur et à mesure que la descente se poursuit, les mâchoires 26 sont sollicitées radialement vers l'extérieur par l'appui de l'extrémité haute du piston 86 sur les extrémités chanfreinées 36 de ces mâchoires. Cela conduit à un écartement des mâchoires autorisé par la mise en contrainte du ressort à spirales 32 entourant ces mâchoires, et permis par un diamètre d'alésage suffisant dans l'embout 6. D'ailleurs, durant cette descente, une partie basse des mâchoires est destinée à être en saillie de l'embout 6 de manière à permettre une plus grande déformation de ces mâchoires, radialement vers l'extérieur.

Lorsque les mâchoires s'écartent et que la descente de la tige de commande est poursuivie, cela conduit à introduire progressivement l'extrémité haute 86 du piston dans l'espace 60 défini par ces mâchoires. L'introduction est achevée lorsque les extrémités 36 des mâchoires arrivent en butée contre la collerette 90 du piston, elle-même en butée contre l'épaulement 92, comme cela est montré sur la figure 6. Cette position correspond surtout à la position basse de la tige de commande et de la pince en appui sur cette tige, puisque la pince 20 est alors en butée basse sur le corps inférieur 4, par contact entre les épaulement 44, 40. A ce stade, le ressort 42 est comprimé au maximum entre les deux épaulements 38, 40.

A la fin de cette étape, le piston se situe en position basse de butée dans le capillaire. Ainsi, pour simplifier le processus de prélèvement, la tige de commande 8 est maintenue en position basse jusqu'au prélèvement de l'échantillon, durant lequel la tige de commande remonte avec le piston pour créer l'aspiration du liquide.

C'est ensuite la dispense du liquide prélevé qui est effectuée, par déplacement de la tige de commande via son bouton 12, d'une manière identique à celle réalisée pour la préhension du piston. En effet, la course est la même, amenant la tige de commande 8 en position basse jusqu'au contact entre les épaulements 44, 40, montré sur la figure 6.

Enfin, il est procédé à l'éjection de l'ensemble consommable 84, à l'aide de la tige d'éjection 46 actionnée par son bouton de commande 48.

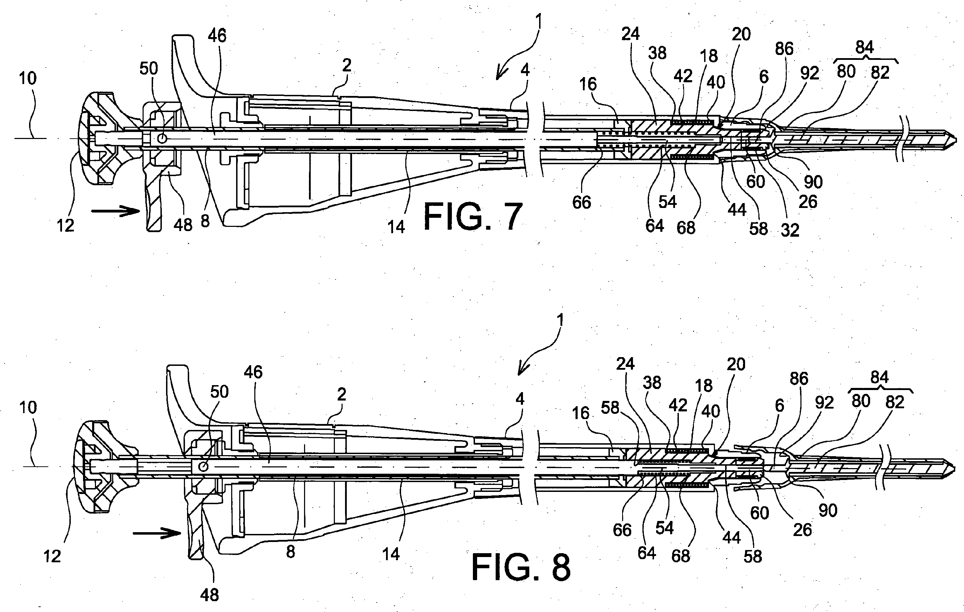

La raideur du ressort de rappel 64 est telle que durant une première course, ce ressort ne se comprime pas et la tige d'éjection 46 en déplacement entraîne avec elle la tige de commande 8. Cette phase a été schématisée sur la figure 7.

Lorsque le déplacement de la tige de commande 8 et de la pince 20 est stoppé en translation par butée des épaulements 44, 40 et que le bouton 48 continue à être actionné vers le bas, il se produit alors une seconde course de la tige d'éjection, au cours de laquelle il s'opère un déplacement relatif de la tige 46 par rapport à la tige 8 restant fixe. Cela a pour conséquence d'amener l'extrémité basse 54 de la tige 46 au contact de l'extrémité haute 86 du piston 82, puis d'exercer ensuite un effort d'éjection sur cette même extrémité haute dudit piston. La tige 46 chasse ainsi le piston 82, qui, par appui via sa collerette 90, entraîne avec lui le capillaire 80 jusqu'à l'éjection de l'ensemble consommable 84, comme cela a été schématisé sur la figure 8. A cet égard, la forme de l'extrémité 54 de la tige d'éjection 46 peut être optimisée pour épouser au mieux l'extrémité haute 86 du piston 82, de manière à favoriser le contact entre les deux pièces, par centrage.

## Revendications

1. Pipette de prélèvement (1) à déplacement positif, comprenant une tige de commande (8) dont l'extrémité basse (16) commande le déplacement d'un dispositif (20) de préhension de l'extrémité haute (86) d'un piston (82) appartement à un ensemble capillaire-piston (84) destiné à coopérer avec ladite pipette,
**caractérisée en ce qu'**elle comporte une tige d'éjection (46) dudit ensemble capillaire-piston, montée mobile par rapport à ladite tige de commande (8) de manière à ce que son extrémité basse (54) puisse exercer un effort d'éjection sur l'extrémité haute (86) dudit piston (82) logée dans ledit dispositif de préhension (20), lors d'un déplacement relatif entre la tige d'éjection (46) et la tige de commande (8).

2. Pipette selon la revendication 1, **caractérisée en ce que** ladite tige d'éjection (46) est logée à l'intérieur de la tige de commande creuse (8).

3. Pipette selon la revendication 1 ou la revendication 2, **caractérisée en ce qu'**elle comporte un bouton de commande (12) agencé à l'extrémité haute de la tige de commande (8), ainsi qu'un bouton d'éjection (48) agencé à l'extrémité haute de la tige d'éjection (46) .

4. Pipette selon la revendication 3, caractérisée en en ce que ledit bouton d'éjection (48) est agencé entre le bouton de commande (12) et un corps de pipette (2) formant poignée.

5. Pipette selon la revendication 4, caractérisée en en ce que ledit bouton d'éjection (48) est porté par un organe de support (50) monté sur la tige d'éjection (46) et traversant un passage oblong (52) pratiqué dans la tige de commande (8), ledit organe de support (50) étant apte à coulisser dans ledit passage oblong (52).

6. Pipette selon l'une quelconque des revendications précédentes, **caractérisée en ce que** ledit dispositif de préhension (20) prend la forme d'une pince à au moins deux mâchoires (26) rappelées en position serrée par des moyens élastiques de rappel (32) .

7. Pipette selon la revendication 6, caractérisée en en ce que lesdits moyens élastiques de rappel (32) associés aux mâchoires (26) entourent ces dernières.

8. Pipette selon l'une quelconque des revendications précédentes, **caractérisée en ce qu'**elle est équipée de moyens élastiques de rappel (64) rappelant ladite tige d'éjection (46) dans une position haute relativement à ladite tige de commande (8).

9. Pipette selon la revendication 8 combinée à la revendication 3, **caractérisée en ce que** lesdits moyens élastiques de rappel (64) rappelant ladite tige d'éjection (46) dans une position haute relativement à ladite tige de commande (8) sont conçus de telle sorte que lors d'un actionnement dudit bouton d'éjection (48), une première course a pour effet d'entraîner ladite tige de commande (8) avec ladite tige d'éjection (46), via lesdits moyens élastiques de rappel (64), et **en ce qu'**une seconde course est amorcée lorsque le déplacement de la tige de commande (8) est stoppé en translation par butée en fin de ladite première course, ladite seconde course produisant ledit déplacement relatif entre la tige d'éjection (46) et la tige de commande (8), provoquant ledit effort d'éjection sur l'extrémité haute (86) dudit piston (82).

10. Pipette selon la revendication 9, **caractérisée en ce qu'**elle est conçue de sorte qu'à la fin de ladite première course, ladite tige de commande (8) en butée place ledit dispositif de préhension (220) au moins partiellement en saillie vers le bas à partir d'un embout (6) de pipette sur lequel le capillaire (80) dudit ensemble capillaire-piston (84) est destiné à être emmanché .

11. Pipette selon la revendication 10, **caractérisée en ce que** la butée basse (40) pour ladite tige de commande (8) est agencée sur une partie basse (4) de la pipette intégrant l'embout (6), et de préférence conçue pour coopérer avec une butée (44) prévue sur ledit dispositif de préhension interposé entre ladite tige de commande (8) et la butée basse (40) .

12. Pipette selon l'une quelconque des revendications précédentes, **caractérisée en ce qu'**elle comporte un dispositif (14) de réglage du volume d'échantillon à prélever.

13. Procédé de pipetage à l'aide d'une pipette de prélèvement (1) à déplacement positif selon la revendication 6, comprenant les étapes successives suivantes :
(a) emmanchement du capillaire (80) de l'ensemble capillaire-piston (84) sur un embout de la pipette, et introduction de l'extrémité haute (86) du piston de l'ensemble dans la pince (20) lors du déplacement de ladite tige de commande (8) jusqu'à une position basse, ladite introduction étant réalisée par écartement des mâchoires (26) sollicitées radialement vers l'extérieur par l'appui de l'extrémité haute (86) du piston, ledit écartement étant autorisé par déformation desdits moyens élastiques de rappel (32) associés auxdites mâchoires ;
(b) prélèvement et dispense d'un échantillon par actionnement de ladite tige de commande (8) ;
(c) éjection de l'ensemble capillaire-piston (84) par actionnement de ladite tige d'éjection (8) .

14. Procédé selon la revendication précédente, **caractérisé en ce qu'**à la fin de l'étape (a), ladite tige de commande (8) est maintenue en position basse jusqu'au prélèvement de l'échantillon.

## Patentansprüche

1. Direktverdrängungspipette (1), enthaltend eine Steuerstange (8), mit deren unterem Ende (16) die Verlagerung einer Vorrichtung (20) zum Ergreifen des oberen Endes (86) eines Kolbens (82) gesteuert wird, der zu einer Kapillarkolbenanordnung (84) gehört, die dazu bestimmt ist, mit der Pipette zusammenzuwirken,
**dadurch gekennzeichnet, dass** sie eine Abwurfstange (46) für die Kapillarkolbenanordnung aufweist, die bezüglich der Steuerstange (8) beweglich gelagert ist, so dass ihr unteres Ende (54) eine Abwurfkraft auf das in der Greifvorrichtung (20) aufgenommene obere Ende (86) des Kolbens (82) bei einer relativen Verlagerung zwischen der Abwurfstange (46) und der Steuerstange (8) ausüben kann.

2. Pipette nach Anspruch 1, **dadurch gekennzeichnet, dass** die Abwurfstange (46) innerhalb der hohl ausgeführten Steuerstange (8) aufgenommen ist.

3. Pipette nach Anspruch 1 oder Anspruch 2, **dadurch gekennzeichnet, dass** sie einen Steuerknopf (12) aufweist, der am oberen Ende der Steuerstange (8) angeordnet ist, sowie einen Abwurfknopf (48), der am oberen Ende der Abwurfstange (46) angeordnet ist.

4. Pipette nach Anspruch 3, **dadurch gekennzeichnet, dass** der Abwurfknopf (48) zwischen dem Steuerknopf (12) und einem griffbildenden Pipettenkorpus (2) angeordnet ist.

5. Pipette nach Anspruch 4, **dadurch gekennzeichnet, dass** der Abwurfknopf (48) von einem Tragglied (50) getragen wird, das an der Abwurfstange (46) angebracht ist und sich durch einen länglichen Durchgang (52) erstreckt, der in der Steuerstange (8) ausgeführt ist, wobei das Tragglied (50) in dem länglichen Durchgang (52) verschiebbar ist.

6. Pipette nach einem der vorangehenden Ansprüche, **dadurch gekennzeichnet, dass** die Greifvorrichtung (20) in Form einer Klemme mit zumindest zwei Klemmbacken (26) vorliegt, die über Federrückstellmittel (32) in die Klemmstellung zurückgestellt werden.

7. Pipette nach Anspruch 6, **dadurch gekennzeichnet, dass** die Federrückstellmittel (32), die den Klemmbacken (26) zugeordnet sind, letztere umgeben.

8. Pipette nach einem der vorangehenden Ansprüche, **dadurch gekennzeichnet, dass** sie mit Federrückstellmitteln (64) versehen ist, die die Abwurfstange (46) in eine obere Stellung relativ zur Steuerstange (8) zurückstellen.

9. Pipette nach Anspruch 8 in Kombination mit Anspruch 3, **dadurch gekennzeichnet, dass** die Federrückstellmittel (64), die die Abwurfstange (46) in eine obere Stellung relativ zur Steuerstange (8) zurückstellen, so ausgebildet sind, dass bei einer Betätigung des Abwurfknopfs (48) ein erster Hub zur Wirkung hat, die Steuerstange (8) mit der Abwurfstange (46) über die Federrückstellmittel (64) mitzunehmen, und dass ein zweiter Hub dann ausgelöst wird, wenn die Verschiebebewegung der Steuerstange (8) durch Anschlagen in der Hubendstellung des ersten Hubs unterbrochen wird, wobei der zweite Hub die relative Verlagerung zwischen der Abwurfstange (46) und der Steuerstange (8) bewirkt, wodurch die Abwurfkraft auf das obere Ende (86) des Kolbens (82) hervorgerufen wird.

10. Pipette nach Anspruch 9, **dadurch gekennzeichnet, dass** sie so ausgebildet ist, dass in der Hubendstellung des ersten Hubs die auf Anschlag befindliche Steuerstange (8) die Greifvorrichtung (220) so positioniert, dass sie ausgehend von einem Pipettenansatzstück (6), an dem die Kapillare (80) der Kapillarkolbenanordnung (84) aufgesteckt werden soll, zumindest teilweise nach unten vorspringt.

11. Pipette nach Anspruch 10, **dadurch gekennzeichnet, dass** der untere Anschlag (40) für die Steuerstange (8) an einem unteren Abschnitt (4) der Pipette, in dem das Ansatzstück (6) eingegliedert ist, angeordnet ist und vorzugsweise dazu ausgebildet ist, mit einem Anschlag (44) zusammenzuwirken, der an der Greifvorrichtung vorgesehen ist, die zwischen der Steuerstange (8) und dem unteren Anschlag (40) zwischengefügt ist.

12. Pipette nach einem der vorrangehenden Ansprüche, **dadurch gekennzeichnet, dass** sie eine Vorrichtung (14) zum Einstellen des zu entnehmenden Probenvolumens aufweist.

13. Verfahren zum Pipettieren mit Hilfe einer Direktverdrängungspipette (1) nach Anspruch 6, das die nachstehenden, aufeinanderfolgenden Schritte umfasst:
(a) Aufstecken der Kapillare (80) der Kapillarkolbenanordnung (84) auf ein Ansatzstück der Pipette und Einführen des oberen Endes (86) des Kolbens der Anordnung in die Klemme (20) bei der Verlagerung der Steuerstange (8) bis in eine untere Stellung, wobei das Einführen durch Auseinanderspreizen der Klemmbacken (26) erfolgt, die radial nach außen durch Andrücken des oberen Endes (86) des Kolbens beaufschlagt werden, wobei das Auseinanderspreizen durch Verformung der den Klemmbacken zugeordneten Federrückstellmittel (32) gestattet wird;
(b) Entnehmen und Abgeben einer Probe durch Betätigung der Steuerstange (8);
(c) Abwerfen der Kapillarkolbenanordnung (84) durch Betätigung der Abwurfstange (8).

14. Verfahren nach dem vorangehenden Anspruch, **dadurch gekennzeichnet, dass** am Ende von Schritt (a) die Steuerstange (8) bis zum Entnehmen der Probe in der unteren Stellung gehalten wird.

## Claims

1. A positive displacement sampling pipette (1), comprising a control rod (8) the bottom end (16) of which controls the displacement of a device (20) for gripping the top end (86) of a piston (82) belonging to a capillary-piston assembly (84) intended to cooperate with said pipette,
**characterised in that** it includes a rod (86) for ejecting said capillary-piston assembly, movably mounted with respect to said control rod (8) such that its bottom end (54) can exert an ejection strain on the top end (86) of said piston (82) accommodated in said gripping device (20), during a relative displacement between the ejection rod (46) and the control rod (8).

2. The pipette according to claim 1, **characterised in that** said ejection rod (46) is accommodated inside the hollow control rod (8).

3. The pipette according to claim 1 or claim 2, **characterised in that** it includes a control button (12) arranged at the top end of the control rod (8), as well as an ejection button (48) arranged at the top end of the ejection rod (46).

4. The pipette according to claim 3, **characterised in that** the ejection button (48) is arranged between the control button (12) and a handle forming pipette body (2).

5. The pipette according to claim 4, **characterised in that** said ejection button (48) is carried by a support member (50) mounted on the ejection rod (46) and passing through an oblong passageway (52) provided in the control rod (8), said support member (50) being able to slide in said oblong passageway (52).

6. The pipette according to any of the preceding claims, **characterised in that** the gripping device (20) has the form of a clip having at least two jaws (26) returned into a clamped position by elastic return means (32).

7. The pipette according to claim 6, **characterised in that** the elastic return means (32) associated with the jaws (26) surround the latter.

8. The pipette according to any of the preceding claims, **characterised in that** it is equipped with elastic return means (64) returning said ejection rod (46) into a high position relative to said control rod (8).

9. The pipette according to claim 8 combined with claim 3, **characterised in that** said elastic return means (64) returning said ejection rod (46) into a high position relative to said control rod (8) are designed such that upon actuating said ejection button (48), a first stroke results in driving said control rod (8) with said ejection rod (46), via said elastic return means (64), and **in that** a second stroke is triggered when the displacement of the control rod (8) is translationally stopped by means of a stop at the end of said first stroke, said second stroke resulting in said relative displacement between the ejection rod (46) and the control rod (8), causing said ejection strain on the top end (86) of said piston (82) .

10. The pipette according to claim 9, **characterised in that** it is designed such that at the end of said first stroke, said control rod (8) being stopped places said gripping device (220) at least partially projecting downwardly from a pipette tip (6) on which the capillary (80) of said capillary-piston assembly (84) is intended to be fitted.

11. The pipette according to claim 10, **characterised in that** the bottom stop (40) for said control rod (8) is arranged on a low part (4) of a pipette integrating the tip (6), and preferably designed to cooperate with a stop (44) provided on said gripping device interposed between said control rod (8) and the bottom stop (40).

12. The pipette according to any of the preceding claims, **characterised in that** it includes a device (14) for adjusting the sample volume to be sampled.

13. A pipetting method using a positive displacement sampling pipette (1) according to claim 6, comprising the following successive steps:
(a) fitting the capillary (80) of the capillary-piston assembly (84) onto a tip of the pipette, and introducing the top end (86) of the piston of the assembly into the clip (20) during the displacement of said control rod (8) up to a low position, said introducing being performed by moving apart the radially outwardly biased jaws (26) by bearing the top end (86) of the piston, said moving apart being allowed by deforming said elastic return means (32) associated with said jaws;
(b) sampling and dispensing a sample by actuating said control rod (8);
(c) ejecting the capillary-piston assembly (84) by actuating said ejection rod (8).

14. The method according to the preceding claim, **characterised in that** at the end of step (a), said control rod (8) is kept in a low position until the sample is sampled.
